# EUROPEAN PATENT APPLICATION

(11) **EP 4 674 272 A1**
(43) Date of publication of application: **07.01.2026**
(21) Application number: 24306063.9
(22) Date of filing: 01.07.2024
(51) Int. Cl.: A23C 11/10, A23L 2/52, A23L 11/60, A23L 11/65, A23L 33/185

(54) **DAIRY ALTERNATIVE PLANT BASED FOOD PRODUCTS**

(71) Applicant: Compagnie Gervais Danone, 75009 Paris (FR)
(72) Inventor: MERLET JUNAIDI, Theresia, 91190 Gif-sur-Yvette (FR); ALI, Zain, 91190 Gif-sur-Yvette (FR); CORAGLIA, Diego, 91190 Gif-sur-Yvette (FR)
(74) Representative: De Clercq & Partners

(57) **Abstract**

The present invention relates to dairy-alternative plant-based food products. The invention also provides a method for obtaining the dairy-alternative plant-based food products, and beverages or yoghurts based thereon.

## Description

### TECHNICAL FIELD

The present invention is situated in the field of food technology. In particular, the invention is directed to plant-based food products, such as plant-based beverage products and yoghurts, as dairy alternatives. More particularly, the invention provides plant-based food products, in particular legume-, nut- or cereal-based food products, with an improved texture and milk-like taste. The invention also provides methods for obtaining such plant-based food products.

### BACKGROUND

The consumption of plant-based dairy-alternative products, particularly plant-based milks, has experienced significant growth driven by consumer demand for alternatives to traditional dairy products. While these plant-based alternatives are in many aspects more environmentally responsible and cater to dietary preferences such as veganism and lactose intolerance, they often face challenges in replicating the sensory characteristics, particularly the taste profile, of dairy milk.

One of the primary challenges in developing high-quality plant-based dairy alternatives lies in achieving a taste and mouthfeel comparable to conventional dairy milk. Consumers may prefer the creamy texture, richness, dairy notes and mild sweetness characteristic of dairy milk, which can be difficult to replicate using plant-derived ingredients. Moreover, plant-based formulations often exhibit undesirable off-notes and aftertastes, which can detract from overall consumer acceptance and limit market adoption.

Addressing these challenges requires innovative approaches in formulation and processing technologies to enhance the sensory attributes of plant-based dairy-alternative products. Specifically, there is a critical need in the industry to develop products that mitigate off-notes and other undesirable tastes inherent to plant-based ingredients, while simultaneously improving the overall sensory experience to more closely resemble that of dairy milk products.

There remains a need for plant-based food products with organoleptic properties resembling those of equivalent dairy products. The present invention discloses novel compositions and methods to provide plant-based dairy-alternative products with improved taste and texture, thereby improving consumer acceptability. By addressing these technical hurdles, the invention seeks to meet the growing consumer demand for high-quality dairy-alternative food products.

### SUMMARY OF THE INVENTION

The present invention addresses one or more of the above discussed needs in the art.

It is an object of the present invention to provide plant-based food products with organoleptic properties similar to those of the corresponding dairy food product.

It has been discovered by the present inventors that addition of one or more mineral salts chosen from sodium lactate and copper gluconate can improve the organoleptic properties of plant-based food products.

Therefore, the invention provides for the following aspects:
Aspect 1. A dairy-alternative plant-based food product comprising:
a. one or more salts selected from the group consisting of lactate salts and gluconate salts, wherein each of said one or more salts is in an amount from 0.0001 % w/w - 2 % w/w based on the total weight of said plant-based food product; and
b. 0.1 % w/w - 30 % w/w plant-based protein based on the total weight of said plant-based food product, and
c. optionally one or more ingredients selected from the group consisting of texturizing and/or stabilizing agent, texturizing and/or stabilizing agent, sweetening agent, flavoring agent, vegetal fat, health-related supplement and/or combinations thereof.

Water is typically present in an amount balancing the amounts of all other ingredients to 100 % w/w.

In one particular embodiment of aspect 1, the lactate salts are selected from the group consisting of calcium lactate, magnesium lactate, ferrous lactate, zinc lactate, sodium lactate, potassium lactate and combinations thereof; and the gluconate salts are selected from the group consisting of calcium gluconate, magnesium gluconate, ferrous gluconate, zinc gluconate, manganese gluconate, cupric gluconate, sodium gluconate, potassium gluconate and combinations thereof.

Aspect 2. A dairy-alternative, plant-based food product comprising:
a. one or more salts selected from the group consisting of sodium lactate, preferably sodium L-lactate, and copper gluconate, wherein each of said one or more salts is in an amount from 0.0001 % w/w - 2 % w/w based on the total weight of said plant-based food product; and
b. from 0.1 % w/w - 30 % w/w plant-based protein based on the total weight of said plant-based food product, and
c. optionally one or more ingredients selected from the group consisting of texturizing and/or stabilizing agent, sweetening agent, flavoring agent, vegetal fat, health-related supplement and/or combinations thereof.

Water is typically present in an amount balancing the amounts of all other ingredients to 100 % w/w.

In one particular embodiment of aspect 1 or 2, the total amount of salts in the food product is between 0.001 % w/w and 5 % w/w.

Aspect 3. The food product according to aspect 1 or 2, comprising sodium lactate, preferably sodium L-lactate.

In one particular embodiment of aspect 3, the amount of sodium L-lactate, is 0.005 % w/w - 2 % w/w.

Aspect 4. The food product according to any one of aspects 1 to 3, comprising sodium lactate, preferably sodium L-lactate, and copper gluconate.

In one particular embodiment of aspect 4, the amount of copper gluconate is 0.0001 % w/w - 1.5 % w/w.

Aspect 5. The food product according to any one of aspects 1 to 5, further comprising a citrate salt, preferably trisodium citrate.

In a particular embodiment of aspect 5, the food product comprises sodium-L-lactate, copper gluconate and trisodium citrate.

Aspect 6. The food product according to any one of aspects 1 to 5, wherein the plant-based protein in the food product is selected from the group consisting of a legume protein, a nut protein, a cereal protein, and/or mixtures or any combination thereof.

Aspect 7. The food product according to any one of aspects 1 to 6, wherein the plant-based protein in the food product is a legume protein selected from the group consisting of: soy beans, yellow peas, green peas, split peas, field peas, dry peas, lentil, chickpea/garbanzo bean, navy bean, white navy bean, white pea bean, pea bean, cow pea, horse bean, haricot, pinot bean, mottled bean, small red bean, red Mexican bean, kidney bean, black bean, black turtle bean, cranberry bean, roman bean, speckled sugar bean, lima bean, fava or faba bean, Madagascar bean, green gram, mung bean, green bean, black gram, urad dal, lupin, ube, and/or mixtures or any combination thereof.

Aspect 8. The food product according to any one of aspects 1 to 6, wherein the plant-based protein in the food product is a nut selected from the group consisting of: almond, coconut, hazelnut, peanut, cashew, pecan, walnut, macadamia nut, Brazil nut, pine nut, chestnut, tiger nut, pistachio, and/or mixtures or any combination thereof.

Aspect 9. The food product according to any one of aspects 1 to 6, wherein the plant-based protein in the food product is a cereal selected from the group consisting of: oat, rye, rice, barley, spelt, millet, sorghum, teff, quinoa, hemp, chia, and/or mixtures or any combination thereof

Aspect 10. The food product according to any one of aspects 1 to 7, which is a soy-based food product.

In one particular aspect, the food product according to any one of aspects 1 to 6 and aspect 7, the food product is a pea-based food product.

In one particular aspect, the food product according to any one of aspects 1 to 6 and aspect 8, the food product is an almond-based food product.

In one other particular aspect, the food product according to any one of aspects 1 to 6 and aspect 9, the food product is an oat-based food product.

Aspect 11. The food product according to any one of aspects 1 to 10, which is a milk-like product, a beverage, a drinking milk-like product, a milkshake, a drinking yoghurt-like product, a yoghurt-like product, a cheese-like product, a dessert pudding, a dessert cream and an ice cream product.

Aspect 12. The food product according to any one of aspects 1 to 11, which is a beverage, preferably a soy-based beverage.

In one particular embodiment of aspect 11, the beverage is a pea-based beverage, an oat-based beverage or an almond-based beverage.

Aspect 13. The use of one or more mineral salts chosen from gluconate salts and lactate salts, preferably sodium L-lactate, for modifying the organoleptic properties of dairy-alternative plant-based food products to be closer to those of dairy products, preferably wherein said one or more mineral salts are added to a plant-based protein composition each in an amount of between 0.0001 % w/w and 2 % w/w based on the total weight of said plant-based food product.

In a preferred embodiment of aspect 13, the mineral salts are chosen from copper gluconate and sodium lactate, preferably sodium L-lactate.

Aspect 14. A method for the preparation of a dairy-alternative plant-based food product according to any one of aspects 1 to 13, comprising the steps of:
a. providing a mixture comprising:
   - 0.0001 % w/w to 2 % w/w of one or more salts selected from lactate salts and gluconate salts based on the total weight of said plant-based food product; and
   - 0.1 % w/w to 30 % w/w of plant-based protein based on the total weight of said plant-based food product; and
   - optionally one or more ingredients selected from the group consisting of texturizing and/or stabilizing agent, texturizing and/or stabilizing agent, sweetening agent, flavoring agent, vegetal fat, health-related supplement and/or combinations thereof,
b. carrying out one or more processes selected from the group consisting of homogenization, heat treatment, fermentation and/or combinations thereof; and
c. optionally packaging the processed mixture.

In a preferred embodiment of aspect 14, the lactate salts are chosen from calcium lactate, magnesium lactate, ferrous lactate, zinc lactate, sodium lactate and potassium lactate; and the gluconate salts are chosen from calcium gluconate, magnesium gluconate, ferrous gluconate, zinc gluconate, manganese gluconate, cupric gluconate, sodium gluconate and potassium gluconate.

In a further preferred embodiment of aspect 14, the one or more salts are chosen from copper gluconate and sodium lactate, preferably sodium L-lactate.

In one particular embodiment of aspect 14, the total amount of salts in the food product does not exceed 5% w/w, preferably 1% w/w or 0.8 % w/w, more preferably 0.5% w/w.

Aspect 15. A dairy-alternative plant-based food product obtained by the method according to aspect 14.

Aspect 16. The dairy-alternative plant-based food product according to aspect 15 which is a milk-like product, a beverage, a drinking milk-like product, a milkshake, a drinking yoghurt-like product, a yoghurt-like product, a cheese-like product, a dessert pudding, a dessert cream and an ice cream product.

Aspect 17. The dairy-alternative plant-based food product according to aspect 15 is a pea-based food product.

Aspect 18. The dairy-alternative plant-based food product according to aspect 15 is a soy-based food product.

Aspect 19. The dairy-alternative plant-based food product according to aspect 15 is an almond-based food product.

Aspect 20. The dairy-alternative plant-based food product according to aspect 15 is an almond-based food product.

Aspect 21. A method for increasing the oat or almond taste in dairy-alternative plant-based food products, comprising adding copper gluconate, preferably in an amount from 0.0001 % w/w - 2 % w/w, more preferably in an amount from 0.001 % w/w -0.5% w/w based on the total weight of said oat- or almond-based food product.

Aspect 21. Use of copper gluconate for increasing the oat or almond taste in dairy-alternative plant-based food products, wherein copper gluconate is added in an amount from 0.0001 % w/w - 2 % w/w, preferably in an amount from 0.001 % w/w -0.5% w/w based on the total weight of said oat- or almond-based food product.

Aspect 22. A dairy-alternative oat- or almond-based food product comprising copper gluconate in an amount from 0.0001 % w/w - 2 % w/w, preferably from 0.001 % w/w -0.5% w/w, more preferably from 0.001 % w/w -0.4% w/w or from 0.001 % w/w -0.3% w/w based on the total weight of said oat- or almond-based food product.

### BRIEF DESCRIPTION OF THE DRAWINGS

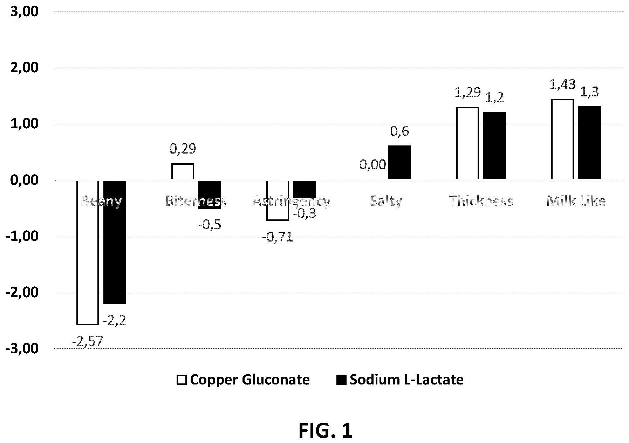

**Figure 1****.** Sensory evaluation of a soy-based milk performed within 2-4 days after production by 3-6 trained panelists. A comparative analysis test was used to evaluate each sample with the reference, i.e. soy milk without any mineral salt added, on a scale from -3 to + 3. The reference sample was always ranked as zero for each descriptor.

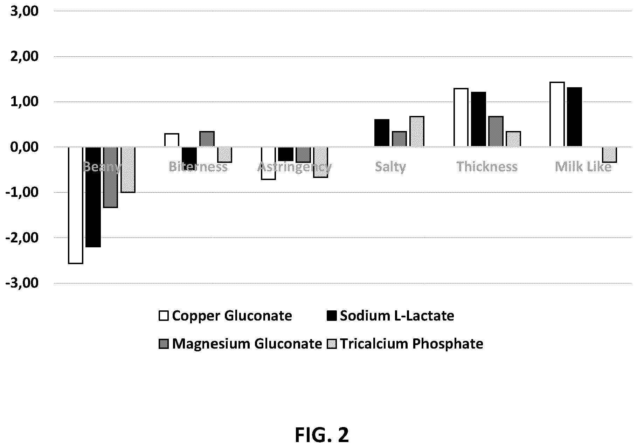

**Figure 2****.** Sensory evaluation of a soy-based milk prepared and evaluated as described in Example 1, wherein magnesium gluconate or tricalcium phosphate were added as mineral salt, and compared to the soymilk with copper gluconate and sodium L-lactate from Example 1.

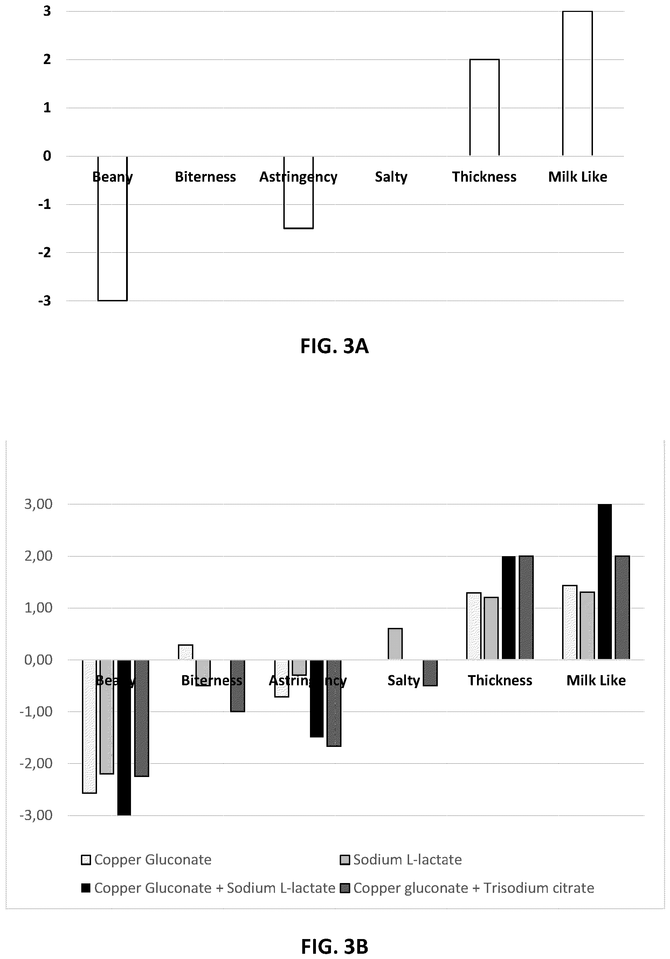

**Figure 3****. A:** The combined effect of the most promising mineral salts i.e., copper gluconate (CG) and sodium L-lactate (SL) each in n amount of 0.0001 % w/w - 2% w/w in a soya drink was assessed in the soya drink, based on organoleptic properties. **B:** Comparison of the effects of blends of minerals with single minerals on organoleptic properties.

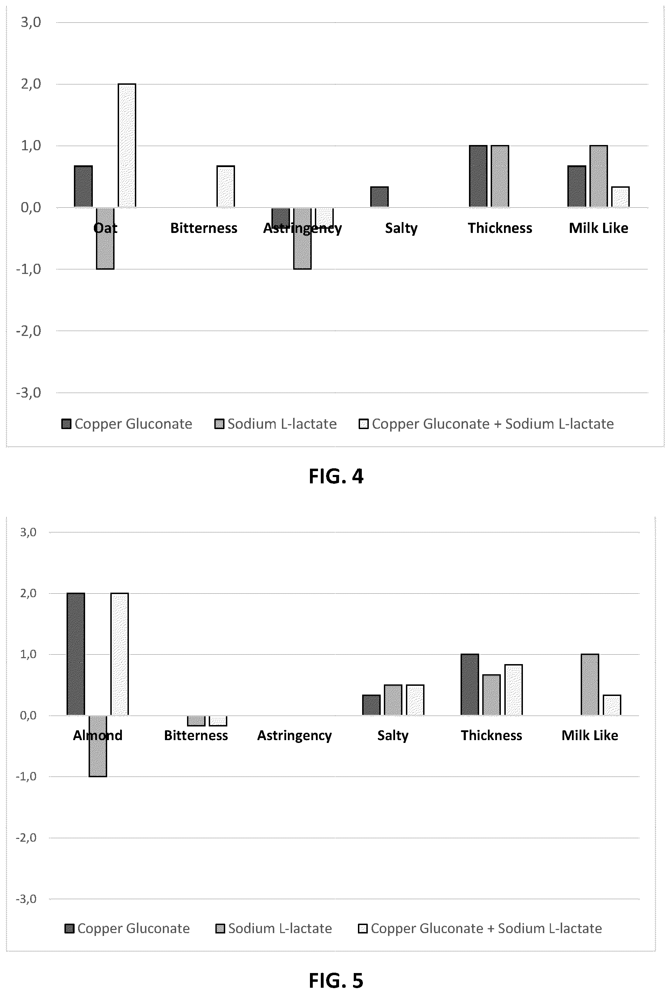

**Figure 4****.** Sensory evaluation of Oat-based milk performed within 2-4 days after production by 3-6 trained panelists. A comparative analysis test was used to evaluate each sample with the reference, i.e. oat milk without any mineral salt added, on a scale from -3 to + 3. The reference sample was always ranked as zero for each descriptor.
**Figure 5****.** Sensory evaluation of Almond-based milk performed within 2- 4 days after production by 3-6 trained panelists. A comparative analysis test was used to evaluate each sample with the reference, i.e.
almond milk without any mineral salt added, on a scale from -3 to + 3. The reference sample was always ranked as zero for each descriptor.

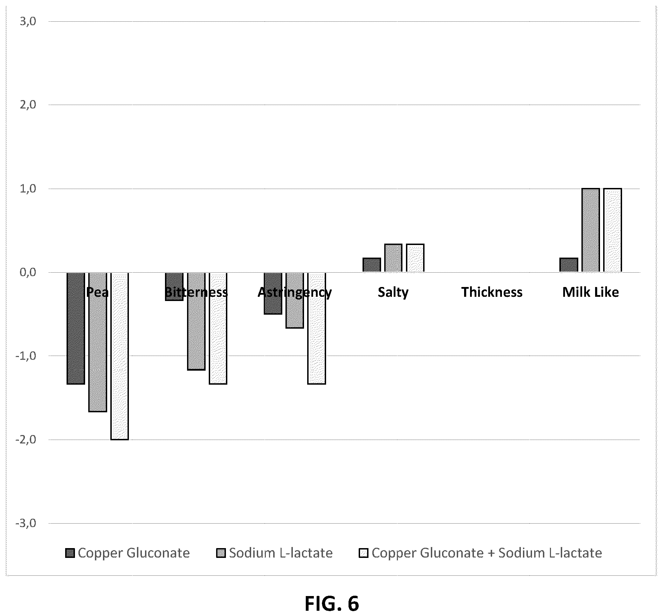

**Figure 6****.** Sensory evaluation of Pea-based milk performed within 2-4 days after production by 3-6 trained panelists. A comparative analysis test was used to evaluate each sample with the reference, i.e. pea milk without any mineral salt added, on a scale from -3 to + 3. The reference sample was always ranked as zero for each descriptor.

### DETAILED DESCRIPTION OF THE INVENTION

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements, or method steps. The term also encompasses "consisting of" and "consisting essentially of".

The recitation of numerical ranges by endpoints includes all numbers and fractions subsumed within the respective ranges, as well as the recited endpoints.

In the context of this application, the term "at least" also includes the starting point of the open range. For example, an amount of "at least 95.00 % w/w" means any amount equal to 95.00 percentage by weight or above.

The term "about" as used herein when referring to a measurable value such as a parameter, an amount, a temporal duration, and the like, is meant to encompass variations of and from the specified value, in particular variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed. For example, an amount of "about 20 weight %" means any amount within the range of 18.00 to 22.00 weight %.

When a numerical value is used to indicate temperature, said value encompasses the exact numerical value as such, as well as all numerical values that would be rounded up to said exact numerical value according to standard mathematical and/or statistical regulations. For example, a temperature of "95°C", encompasses the values of 94.5; 94.6; 94.7; 94.8; 94.9; 95.0; 95.1; 95.2; 95.3; and 95.4°C. When this is used in combination with the term "about", said temperature encompasses also temperatures that differ from said exact temperature by 0.1, 0.2, 0.3, 0.4, 0.5, 0.6, 0.7, 0.7, 0.9, or 1.0 °C, both in the positive or negative range.

Similarly, when a period of time is indicated using a numerical value such as "about 1 hour" or "about 60 minutes", said value encompasses the exact time indicated as well as periods that deviate therefrom by e.g. less than one minute, half a minute, or 1, 2, 3, 4, 5, 6, 7, 8, 9, 10, 11, 12, 13, 14 or 15 minutes. Analogously, the term "about 1 hour" encompasses about 45, 50, 55 minutes to about 65, 70, and 75 minutes, as well as any time in between.

As used throughout the present disclosure, the terms "concentration" and "content" are used interchangeably and refer to the weight concentration or mass fraction of a constituent, i.e. the mass of a constituent divided by the total mass of all constituents and is expressed in mg per kg or parts per million (ppm).

As used herein, the terms "x% (w/w)", "x% w/w", "wt.%" are equivalent to "x g per 100 g". Unless indicated otherwise, all % values shall be taken to indicate x% w/w.

As used herein the term "vegetal" shall be taken to mean edible parts of a plant including but not limited to vegetables, fruits, flowers, stems, seeds, leaves, and roots.

In the context of this application, unless otherwise provided, amounts refer to amounts by weight.

All documents cited in the present specification are hereby incorporated by reference in their entirety.

Unless otherwise specified, all terms used in disclosing the invention, including technical and scientific terms, have the meaning as commonly understood by one of ordinary skill in the art to which this invention belongs. By means of further guidance, term definitions may be included to better appreciate the teaching of the present invention.

In a first aspect, the present invention provides for to a dairy-alternative, plant-based food product comprising:
a. one or more salts selected from the group consisting of lactate salts and gluconate salts, wherein each of said one or more salts is in an amount from 0.0001 % w/w - 2 % w/w based on the total weight of said plant-based food product; and
b. from 0.1 % w/w - 30 % w/w plant-based protein based on the total weight of said plant-based food product, and
c. optionally one or more ingredients selected from the group consisting of texturizing and/or stabilizing agent, sweetening agent, flavoring agent, vegetal fat, health-related supplement and/or combinations thereof.

Water is typically present in an amount balancing the amounts of all other ingredients to 100 % w/w.

In one particular embodiment, the lactate salts are chosen from calcium lactate, magnesium lactate, ferrous lactate, zinc lactate, sodium lactate and potassium lactate; and the gluconate salts are chosen from calcium gluconate, magnesium gluconate, ferrous gluconate, zinc gluconate, manganese gluconate, cupric gluconate, sodium gluconate and potassium gluconate.

In a further embodiment, the present invention relates to a dairy-alternative, plant-based food product comprising:
a. one or more salts selected from the group consisting of sodium lactate, preferably sodium L-lactate, and copper gluconate, wherein each of said one or more salts is in an amount from 0.0001% - 2% w/w; and
b. 0.1 - 30% w/w plant-based protein;
c. optionally one or more ingredients selected from the group consisting of texturizing and/or stabilizing agent, sweetening agent, flavoring agent, vegetal fat, health-related supplement and/or combinations thereof.

Water is typically present in an amount balancing the amounts of all other ingredients to 100 % w/w.

As used herein the terms dairy-alternative, -analogue or -substitute shall be taken to mean a food product that is formulated to simulate the organoleptic and/or nutritional qualities of an equivalent dairy food.

As used herein the adjective "dairy" shall be taken to refer to a composition or product which comprises or consists of mammalian milk matter, i.e. the lacteal secretion obtainable by milking.

As used herein the term "plant-based" shall be taken to refer to a composition or product which comprises plant or plant-derived matter but does not comprise animal or animal-derived matter including but not limited to dairy, egg, fish, shellfish, meat, dairy milk and insects.

Accordingly, a "dairy-alternative plant-based food product" shall be taken to mean a plant-based food product that is formulated to simulate the organoleptic and/or nutritional and/or texture qualities of dairy food.

The term "food" or "food product" is used herein in a broad sense, and covers food for humans as well as food for animals (i.e. a feed). Preferably, the food is for human consumption. The food may be in the form of a solution or as a solid, depending on the use and/or the mode of application and/or the mode of administration. The term "beverage" or "beverage product" as used herein particularly denotes a liquid food product intended for consumption by drinking. The term also includes "food ingredients" or "food additives" and "food supplements".

The term "food ingredient" or "food additive" as used herein refers to a formulation which is or can be added in the preparation of other foodstuffs. The food ingredient may be in the form of a solution or as a solid, depending on the use and/or the mode of application and/or the mode of administration.

The terms "nutritional supplement" or "dietary supplement" or "food supplement" as used herein refers to a substance or a composition that provides nutrients to an individual that may otherwise not be consumed in sufficient quantities by said individual.

As shown in the experimental section, the present inventors have found that the organoleptic properties of dairy-alternative, plant-based food products can be improved by addition of lactate salts or r gluconate lactates. Mineral salts approved for food applications are included in the following non- exclusive list: calcium lactate, magnesium lactate, ferrous lactate, zinc lactate, sodium lactate, potassium lactate, calcium gluconate, magnesium gluconate, ferrous gluconate, zinc gluconate, manganese gluconate, cupric gluconate, sodium gluconate and potassium gluconate.

Preferred mineral salts for incorporation in the dairy-alternative, plant-based food products of the invention are sodium lactate, preferably sodium L-lactate, and copper gluconate.

In particular embodiments, the food product of the invention comprises sodium lactate, preferably sodium L-lactate. In particular embodiments, the food product of the invention comprises copper gluconate. In particular embodiments, the amount of sodium lactate or sodium L-lactate is 0.005 % w/w - 2 % w/w and/or the amount of copper gluconate is 0.0001 % w/w - 0.01 % w/w. In other particular embodiments, the total amount of salts in the food products of the invention does not exceed 5% w/w, preferably 1% w/w or 0.1 % w/w, more preferably 0.05 % w/w.

In a preferred embodiment, the dairy-alternative, plant-based food product comprises sodium lactate, preferably sodium L-lactate, and copper gluconate. A blend of both mineral salts was shown to further improve the organoleptic properties of the plant-based food product.

The total amount of the sodium lactate, preferably sodium L-lactate and/or the copper gluconate in the dairy-alternative, plant-based food product is from 0.0001 % w/w to 2% w/w, such as between 0.0003 % w/w and 1.5 % w/w, or between 0.0005 % w/w and 1.2 % w/w, or between 0.0008 % w/w - 1 % w/w, preferably between 0.001 % w/w - 0.5 % w/w.

In certain embodiments the dairy-alternative, plant-based food product comprising one or more salts selected from the group consisting of sodium lactate and copper gluconate, further comprises a citrate salt chosen from calcium citrate malate, magnesium potassium citrate, magnesium salts of citric acid, ferrous citrate, zinc citrate, manganese citrate, cupric citrate, trisodium citrate and potassium citrate, preferably trisodium citrate.

In particular embodiments, the dairy-alternative, plant-based food product comprises sodium lactate and trisodium citrate. In another particular embodiment, the dairy-alternative, plant-based food product comprises sodium lactate, copper gluconate and trisodium citrate. In preferred embodiments, the sodium lactate is sodium L-lactate.

The dairy-alternative, plant-based food product disclosed herein also comprises at least one plant-based protein.

In the food products disclosed herein, said plant-based protein is present in an amount of from 0.01 % to 30 % w/w, preferably from 0.1 % w/w to 25 % w/w, more preferably from 0.5 % w/w to 18 % w/w or from 0.5 % w/w to 15 % w/w or from 0.5 % w/w to 10 % w/w or from 0.5 % w/w to 5 % w/w.

The plant-based protein is preferably selected from the group consisting of a legume protein, a nut protein, a cereal protein, and/or mixtures or any combination thereof.

In some embodiments, the legume protein source may be selected from the group consisting of soy, lentils, chickpeas, peas, beans and/or combinations thereof. The legume protein sources may be selected from the group consisting of: soy beans, yellow peas, green peas, split peas, field peas, dry peas, lentil, chickpeas/garbanzo bean, konda, navy bean, white navy bean, white pea bean, pea bean, cow pea, horse bean, haricot, pinot bean, mottled bean, small red bean, red Mexican bean, kidney bean, black bean, black turtle bean, cranberry bean, roman bean, speckled sugar bean, lima bean, fava or faba bean, Madagascar bean, green gram, mung bean, green bean, black gram, urad dal, lupin, ube, and/or mixtures or any combinations thereof. In preferred embodiments, the legume protein source in the food product comprises soy bean protein or pea protein.

In some embodiments, the nut source may be selected from the group consisting of almond, coconut, hazelnut, peanut, cashew, pecan, walnut, macadamia nut, Brazil nut, pine nut, chestnut, tiger nut, pistachio, and/or mixtures or any combinations thereof.

The term "nut" as used herein may refer to an indehiscent (it does not split open along a definite seam at maturity) dry fruit with one seed and a thick, hard pericarp (the shell). The term "nut" is also used to refer to various hard-shelled fruits or seeds. A "nut" may also be the fruit of certain trees and shrubs that have the seed enclosed in a bony, woody, or leathery covering that does not open when ripe. For example, a hard, dry, one-celled and one-seeded fruit, such as the nuts of the hazel, beech, oak, and chestnut. The term "nut" may also refer to a nut in the true botanical sense or may refer to a nut as in known in the culinary or common-usage sense. By way of example, a Brazil nut is commonly known in the culinary sense as a nut however can also have a botanical classification as a seed. The term "nut" may also refer to the seed-bearing, hard, inner layer (endocarp) of a fruit called a drupe. A "nut" may also refer to a nut-like gymnosperm seed such a pine nut. In preferred embodiments, the nut is selected from the group consisting of almond, coconut, hazelnut, peanut, cashew, pecan, walnut, macadamia nut, Brazil nut, pine nut, chestnut, pistachio and tiger nut and/or mixtures or any combinations thereof. In particular embodiments, the nut is almond.

In some embodiments, the cereal source may be selected from the group consisting of oat, rye, rice, barley, spelt, millet, sorghum, teff, quinoa, hemp, chia, and/or mixtures or any combinations thereof.

The term "cereal" or "grain" as used herein generally refers to the edible fruits of sweet grasses that are used for human and animal nutrition. These fruits are composed of a starchy endosperm, an embryo or germ, and a seed coat or bran, which is made up of a skin and pericarp and an aleurone layer sandwiched between the starchy endosperm and the skin. Non-limiting examples of "cereals" include wheat, rye, oats, barley, triticale which is a hybrid of wheat and rye, spelt, corn, rice, sorghum, millet, and bamboo seeds.

In particular embodiments it is the grain or seed of the cereal which is used for food consumption. In particular embodiments, the cereal is oat grain or oat seed.

Oat or oats (Avena sativa) is a species of cereal grain. Compared to other cereals, oat seeds or grains contain more fat, protein, and soluble fibre, and are especially rich in beta-glucan. Oats typically contain 55 % -70 % starch on a dry matter basis.

In preferred embodiments of the invention, the food product is a soy-based, a pea-based, an almond-based or an oat-based food product.. In other embodiments mixes of soy, pea, almond and/or oat are included in the plant-based food products.

As used herein, the term "beverage" and "based" when used in reference to a plant matter, shall refer to a product comprising at least 0.1% w/w of said plant material, accordingly a soy food product comprises at least 0.1% w/w of soy protein and optionally other plant proteins or mixtures of plant proteins.

Plant-based protein ingredients are known in the art and are commercially available. Non-limiting examples of such protein sources include protein concentrates and protein isolates.

The plant protein source may also be raw or processed plant material. Preferably, the plant protein is provided in a vegetal base. In embodiments, the dairy-alternative, plant-based food product comprises a vegetal base.

The term "plant-based protein concentrate," as used herein, generally refers to protein derived from plant source that has been extracted from the plant source and purified. Protein concentrate may comprise greater than or equal to about 40 %, 50 %, 60 %, 70 %, or 80 %, or more total protein by weight on a dry matter basis. The protein concentration of the protein concentrate may be increased by greater than or equal to about 20 %, 30 %, 40 %, 50 %, 60 %, 70 %, 80 %, or more than the protein concentration of the plant. A protein concentrate may comprise a single type of protein or a combination of different types of proteins.

The term "plant-based protein isolate," as used herein, generally refers to protein derived from a plant source that has been extracted from the plant source and purified. A protein isolate may have a higher purity than a protein concentrate. A protein isolate may be formed by further processing a protein concentrate to increase the protein concentration. Protein isolate may comprise greater than or equal to about 80 %, 90 %, 95 %, or more protein by weight on a dry matter basis.

The term "vegetal base" is intended to include an aqueous suspension comprising water and plant-matter, preferably plant-matter selected from the group consisting of legumes, nuts, cereals and mixtures or combinations thereof. Preferably, the vegetal base is plant-based as defined herein.

Processes for the preparation of such suspensions are known in the art and typically comprise mechanical and/or enzymatic disruption of the plant-matter and hydration and/or combination with a solution, followed optionally by mechanical separation of an aqueous fraction from starchy and/or fibrous matter, e.g., by decanting, centrifugation or filtration. For example, the plant-matter may be milled, ground, soaked, dehulled, and mixed with water, optionally enzymatic hydrolysed and/or homogenized etc. in order to produce a suitable aqueous composition.

In certain embodiments, the plant matter may be a nut butter such as sunflower, sesame, soy, almond, cashew, hazelnut or peanut butter. Processes for the preparation of nut butters typically comprise wet or dry grinding roasted or unroasted nuts to a paste having a particle size suitable for the preparation of nut beverages.

In certain embodiments, the plant matter may be a hydrolysed cereal suspension such as an oat milk or syrup. Processes for the preparation of such cereal suspensions typically comprise mixing an oat material (such as rolled oats, milled oats, oat flour or oatmeal) with water and treating enzymatically by amylases to hydrolyse starch followed by removal of suspended matter. The cereal material preferably comprises endosperm, in particular the cereal material may consist of cereal endosperm or cereal wholegrain. Preferably, the cereal material is a cereal wholegrain. In the context of the present application, the term "wholegrain" or "cereal wholegrain" refers to cereal fruits of which only the husks have been removed, i.e. which still completely contain the endosperm, the germ and the bran. The main components of the anatomical structure of a whole cereal grain, namely the endosperm, the embryo and the seed coat or bran, are included in the "wholegrain" in the same proportion as in the original whole grain. Whole grains can be broken down into fragments of different sizes, resulting in e.g., grist, groats, or flour. Another variant made from whole grains by mechanical processing are flakes. The term "wholegrain" as used herein encompasses any form of the cereal material, including whole grains as well as, e.g., grists, groats, flakes, flour.

In some embodiments, the vegetal base may comprise plant proteins inherent to the vegetal matter of the base or may be plant protein ingredients. Plant protein ingredients are known in the art and are commercially available. Plant protein ingredients can be, for example, a plant protein isolate, concentrate or flour.

The vegetal base disclosed herein typically comprise water. Water is typically present in an amount balancing the amounts of other ingredients to 100 % by weight. In an embodiment water is present in an amount between 4 0% and 95 % by weight, for example, from 60 % to 90 %, or from 40 % to 45 % or from 45 % to 50 % or from 50 % to 55 % or from 55 % to 60 % or from 60 % to 65 % or from 65 % to 70 % or from 70 % to 75 %, or from 75 % to 80 % or from 80 % to 85 % or from 80 % to 85 % by weight.

Additional ingredients may be optionally included in the dairy-alternative, plant-based food products of the invention such as one or more of a texturizing and/or stabilizing agent, sweetening agent, flavoring agent, vegetal fat, health-related supplements and/or combinations thereof..

The dairy-alternative, plant-based food products disclosed herein comprise water. Water is typically present in an amount balancing the amounts of other ingredients to 100% by weight. In an embodiment water is present in an amount between 40% and 90% by weight, for example, or from 60% to 90%, or from 40% to 45% or from 45% to 50% or from 50% to 55% or from 55% to 60% or from 60% to 65% or from 65% to 70% or from 70% to 75%, or from 75% to 80% or from 80% to 85% or from 80% to 85%.

The dairy-alternative, plant-based food products disclosed herein optionally may include at least one texturizing and/or stabilizing agent, preferably a hydrocolloid agent. Such texturizing and/or stabilizing agents provide texture and/or stability to the products of the invention. Suitable examples of sources of hydrocolloids include, but are not limited to botanical hydrocolloids including, gum tragacanth, gum Arabic, gum karaya, gum mesquite gum, acacia gum, gellan gum, starch, pectin, cellulose, glucans, xyloglucans, arabinoxylans, inulin, soybean, polysaccharide, konjac mannan, guar gum, locust bean gum, guar gum, tara gum, tamarind gum, basil seed gum, mustard seed gum, agar, carrageenan, alginate, xanthan gum, curdlan, and dextran.

Such compounds are known in the art and are commercially available. Gellan gum can be, for example, a high acyl gellan gum.

These plant-based food products may comprise a single hydrocolloid agent.

The hydrocolloid may be present in these compositions in an amount of from 0.001% to 1% by weight, for example, from 0.01% to 0.1%, or from 0.01% to 0.05%, or from 0.02% to 0.04%, or about 0.04%.

The dairy-alternative, plant-based food products disclosed herein optionally comprise a buffering agent. Examples of such buffering agents include monophosphates, diphosphates, sodium mono- and bicarbonates, potassium mono- and bicarbonates, for example, potassium phosphate, dipotassium phosphate, potassium polyphosphates, sodium bicarbonate, trisodium citrate (also referred to as sodium citrate), sodium phosphate, disodium phosphate, trisodium phosphate and sodium polyphosphates, sodium bicarbonate, calcium carbonate and/or mixtures or combinations thereof.

The buffering agent can be provided in an amount sufficient to provide the pH of the composition of at most 9.5, for example, from 7 to 9.5 or from 8.5 to 9.5. Advantageously, the use of a buffering agent can contribute to product stability without impacting organoleptic properties and consumer perception. In one embodiment the buffering agent is present in an amount of from 0.0001% to 5% by weight, for example, from 0.2% to 1%. The buffering agent in these compositions may be dipotassium phosphate present in an amount of about 0.3%.

The dairy-alternative, plant-based food products disclosed herein optionally may include at least one sweetening agent. Such sweetening agent may contribute to the consumer perceived sweetness properties of the composition. It may also provide texturizing properties to the composition. The sweetening agent may be, but is not limited to, oat concentrate (hydrolyzed oat extract), sucrose, fructose, saccharose, glucose, maltodextrin, dextrose, sorbitol, xylitol, corn syrup, or a mixture thereof. A corn syrup sweetening agent may be, for example, a high fructose corn syrup, a corn syrup solid, cane sugar, beetroot sugar, honey, agave, maple syrup, or a combination thereof. The sweetening agent may be a mixture of at least two of sucrose, fructose, saccharose, glucose, maltodextrin, dextrose, sorbitol, xylitol, oat concentrate, and a corn syrup (for example, a high fructose corn syrup, a corn syrup solid, cane sugar, beetroot sugar, honey, agave, maple syrup).

The sweetening agent may be present in these compositions in an amount of from 0.1% to 10%, by weight. For example, the amount of the sweetening agent may be from 0.5% to 5%, or from 0.8% to 1.5%, or from 0.8% to 1.2%, or about 1.5%.

The dairy-alternative, plant-based food products disclosed herein optionally may include at least one flavoring agent which is different from the sweetening agent. These flavoring agents typically affect the taste of the composition, and the amount thereof in the composition is usually determined according to a taste that is desired. Examples of flavor modification agents that are useful in these compositions may include, but are not limited to, salts, sweeteners, flavors, flavor modifiers, fruits, fruit extracts, and combinations thereof. Popular flavor modification agents that may be used in these compositions include, for example, vanilla flavor or extract, dairy artificial flavor, hazelnut artificial flavor, amaretto, cinnamon, chocolate, caramel. Suitable ranges for an optional flavor modification agent are from 0.0001% to 5% w/w, e.g., from 0.05% to 3%, from 0.1% to 2%, etc. Examples of flavor-modifying salts include sodium chloride, for example, sea salt. Sea salt can be added from 0.0001 to 2.5%, e.g., 0.05%.

The dairy-alternative, plant-based food products disclosed herein optionally comprises at least one vegetal fat. Suitable examples of such fats are vegetal oils including, but not limited to, coconut oil, canola oil, soybean oil, sunflower oil, safflower oil, palm oil, palm kernel oil, olive oil, avocado oil and/or mixtures or combinations thereof. The vegetal oils may be selected from the group consisting of coconut oil, palm oil, palm kernel oil, and/or mixtures or combinations thereof. The vegetal oils may be a combination of coconut oil and sunflower oil. The vegetal fat may be coconut oil in higher concentrations, in embodiments the coconut oil may be provided in the form of or derived from coconut cream.

In one embodiment the vegetal fat is present in an amount of from 1% to 10% by weight, for example, from 2% to 8%, or from 2.5% to 9%, or from 2.9% to 8%, or from 3% to 7%, or from 2.5% to 3.5%. The dairy-alternative, plant-based food products with such amounts of vegetal fat present good organoleptic properties.

The plant proteins in these compositions may act as an emulsifier to form an oil in water emulsion. Alternatively or additionally, a separate emulsifying agent, such as soy lecithin, may be added to these compositions.

Another optional ingredient that may be included in the products of the invention is a health-related supplement, i.e. a food additive such as a micronutrient that is intended to confer a health benefit to the consumer. Food additives can be added to the dairy-alternative food products of the invention in a range from 0.001 % w/w to 5 % w/w. Non-limiting examples of health-related supplements include calcium carbonate (CaCO3), vitamins such as vitamin A, vitamin B2, vitamin B12, vitamin D, and vitamin E, zinc, fibers, potassium, phosphorus, magnesium, iron, calcium, fatty acids (e.g. omega 3, omega 6), oligosaccharides, dietary fibers and/or any other suitable health-related supplement. Preferably, said health-related supplement may be selected based at least in part on a neutral-taste quality that may have little or no impact on the overall organoleptic properties of the final product.

Another optional ingredient that may be included in the products of the invention is a calcium source.

Non-limiting examples of suitable calcium sources are tri-calcium citrate and tri-calcium phosphate.

The plant proteins in these dairy-alternative, plant-based food products may act as an emulsifier to form an oil in water emulsion. Alternatively or additionally, a separate emulsifying agent, such as soy lecithin, may be added to these plant-based food products.

Exemplary plant-based dairy milk alternative compositions of this disclosure include a) water, b) a vegetal fat, c) a plant protein and d) a texturizing/stabilizing agent. Suitable plant-based dairy milk alternative compositions include 80-99% w/w water; 0.0001 % w/w - 4 % w/w of a vegetal fat; 0.0001 % w/w 10 % w/w of a plant protein preferably 0.0001 % w/w - 5 % w/w; and 0.0001 % w/w - 5 % w/w of a texturizing/stabilizing agent;. These compositions may optionally include 0.001 % w/w - 1 % w/w of a hydrocolloid agent; and 0.0001 % w/w - 5 % w/w of a buffering agent; 0.0001 % w/w - 5 % w/w of a sweetening agent; 0.0001 % w/w to 5 % w/w a flavoring agent; and 0.0001 % w/w to 5 % w/w of calcium.

Exemplary plant-based fermented dairy alternative compositions of this disclosure include a) water, b) a vegetal fat, c) a plant protein and d) lactic acid bacteria. Suitable plant-based dairy fermented dairy alternative compositions include 80 % w/w - 99 % w/w water; 0.0001-4% w/w of a vegetal fat; 0.0001 % w/w - 10 % w/w of a plant protein preferably 0.0001 % w/w - 5 % w/w; 0.00001-5% w/w of lactic acid bacteria; and. These compositions may optionally include 0.001 % w/w1 % w/w of a hydrocolloid agent; 0.0001 % w/w - 5 % w/w of a sweetening agent; 0.0001%-5% w/w of a texturizing/stabilizing agent; 0.0001 % w/w to 5 % w/w of a flavoring agent; 0.0001 % w/w - 5 % w/w of a buffering agent and 0.0001 % w/w to 5 % w/w of calcium.

In embodiments the dairy-alternative food product is selected from the group consisting of alternatives to milk and milk-like products, beverages, drinking milk-like products, milkshakes, drinking yoghurt-like products, yoghurt-like products, cheese-like products, dessert puddings, dessert cream and ice cream products.

In particular embodiments the dairy-alternative, plant-based food product is a beverage, a yoghurt-like product, a dessert pudding, a dessert cream or an ice cream.

The term "dairy yoghurt" or "plant-based yoghurt alternative" or " fermented dairy alternative" as used herein shall be taken to mean fermented dairy milk or a plant-base respectively obtained by the acidifying lactic fermentation of the bacteria *Lactobacillus delbrueckii* subsp. *bulgaricus* and *Streptococcus thermophilus* (also referred to as *Streptococcus salivarius* subsp. *thermophilus*), which must be viable in the finished product at a minimum CFU. In certain countries, regulations allow the addition of further lactic acid bacteria to yoghurt such as but not limited to strains of *Bifidobacterium* and/or *Lactobacillus acidophilus* and/or *Lactobacillus casei.* These additional lactic acid bacteria strains are intended to impart various properties to the finished product, such as that of providing organoleptic qualities, favoring equilibrium of intestinal flora or modulating the immune system.

In preferred embodiments the food product is a beverage, preferably a soy-based beverage such as soy milk. In other preferred embodiments the food product is a pea-based, an almond-based or oat-based beverage such as pea-based milk, almond-based milk or oat-based milk. In other embodiments mixes of soy, pea, almond and/or oat are included in the plant-based beverages.

As used herein, the term "beverage" and "based" when used in reference to a plant matter, shall refer to a product comprising at least 0.1% w/w of said plant material, accordingly a soy beverage comprises at least 0.1% w/w of soy protein and optionally other plant proteins, or mixtures of plant proteins.

Another aspect of the invention provides for a method for the preparation of a dairy-alternative plant-based food product described herein comprising:
a. providing a mixture comprising:
   - one or more salts selected from the group consisting of lactate salts and gluconate salts, wherein a total amount of the one or more salts is from 0.0001 % w/w to 2 % w/w;
   - 0.1 % w/w - 30 % w/w plant-based protein; and
   - optionally one or more ingredients selected from the group consisting of texturizing and/or stabilizing agent, sweetening agent, flavoring agent, vegetal fat, health-related supplement and/or combinations thereof,
b. carrying out one or more processes selected from the group consisting of homogenization, heat treatment, fermentation and/or combinations thereof; and
c. optionally packaging the processed mixture.

In a preferred embodiment, the one or more salts in this method are chosen from calcium lactate, magnesium lactate, ferrous lactate, zinc lactate, sodium lactate, potassium lactate, calcium gluconate, magnesium gluconate, ferrous gluconate, zinc gluconate, manganese gluconate, cupric gluconate, sodium gluconate and potassium gluconate, preferably copper gluconate and sodium lactate, preferably copper gluconate and sodium L-lactate.

Homogenization is a commonly used technique in processed food manufacture that is used to reduce particle size, to emulsify and to reduce phase separation during shelf life. High pressure homogenization may be used.

Another process step can be a heat treatment. Heat treatments are known by the person skilled in the art as, for example, pasteurization or sterilization. Preferably, heat treatments are used to eliminate microorganism contaminants such as, for example, bacteria. Heat treatments may be performed in conventional heat exchangers, such as tube or plate heat exchangers. The mixture comprising the salts and plant-based proteins may optionally be pasteurized or sterilized (at a high temperature) for the time necessary for obtaining the desired pasteurizing or sterilizing value, resulting in a food product base having a longer shelf life.

Alternatively, the mixture can be subjected to an ultra-high temperature - short time (UHT-ST) or ultra-high temperature (UHT) heat treatment, shortly termed UHT treatment or UHT. The terms "UHT-ST treatment", "UHT treatment" and "ultra-high temperature processing" are synonyms and denote the sterilization of food by heating it for an extremely short period, preferably between 1 and 10 seconds, at a temperature exceeding 135 °C, such as e.g. at a temperature of between 140 °C and 150 °C, which is the temperature required to kill any residing spores.

Fermentation is another process step that can be used to obtain a dairy-alternative plant-based food products of the invention, in particular a fermented dairy-alternative plant-based food products.

The step of fermenting a mixture may comprise inoculating a bacterial culture into the mixture, preferably a mixture comprising the salt(s) and a vegetal base, and fermenting the same.

Any conventional process for the fermentation of a vegetal base may be applied in the methods of the invention, such as, for example the soy milk fermentation process as disclosed in EP 0 521 331.

A vegetal base such as the soy milk may be fermented with lactic acid bacteria. The lactic acid bacterium may be any lactic acid producing strain, preferably a lactic acid producing strain belonging to a genus selected from the group comprising *Lactobacillus* sp., *Streptococcus* sp., *Lactococcus* sp., *Leuconostoc* sp., *Bifidobacterium* sp. and *Pediococcus* sp, such as a lactic acid producing strain belonging to a species selected from the group comprising *Lactobacillus acidophilus, Lactobacillus bulgaricus, Streptococcus lactis, Streptococcus cremoris, Streptococcus durans, Streptococcus thermophilus, Lactococcus lactis, Leuconostoc citrovorum, Bifidobacterium bifidum, Bifidobacterium longum, Bifidobacterium breve, Bifidobacterium infantis* and *Bifidobacterium animalis.* These lactic acid bacteria may be used alone or in combination. Preferably, the bacterial culture comprises a *Streptococcus thermophilus* strain.

The bacterial culture may be inoculated as living bacteria or in a frozen or freeze-dried state. When inoculating the bacterial culture as living bacteria, a bulk starter culture may be prepared, which may then directly be added to the soy milk.

The amount of inoculum may range between 10³ and 10⁹ CFU/ml, depending on the type of inoculum applied and the temperature and time of fermentation.

The fermentation temperature and the fermentation time may be appropriately decided depending on the type of the lactic acid bacterium to be used. Each bacterial culture has its optimum growth conditions, and these conditions are usually aimed at. Usually, the fermentation is carried out at temperatures between 15°C and 45°C for between 3 and 24 hours. As a general rule, fermentation is allowed to proceed until the acidity of the fermentation mixture has reached a pH below 4.7 or 4.6.

Fermentation may be carried out with any conventional device or fermentation tank, or vessel used for conventional fermentation of e.g. cow milk.

The final food product may finally be packed in any suitable type of recipient, bottle or package. Non-limiting examples are e.g. the Tetra Pak^{®} cardboard packages, plastic, PET, or glass tons, cans or bottles, for distribution and sale to consumers.

The dairy-alternative, plant-based food products may be packaged in a container, the container is then typically sealed, for example, with a gable top, cap, and/or flexible lid. The container may, for example, have a holding capacity or volume of up to 3 kg or 3 L, 2 kg or 2 L, for example, up to 1.5 kg or 1.5 L, for example, up to 1.0 kg or 1.0 L (including, for example a 32oz or 909ml container), for example, up to 500 g or 500 mL, for example, up to 250 g or 250 mL, for example, up to 125 g or 125 mL, for example, up to 100 g or 100 mL, for example, up to 50 g or 50 mL, for example, up to 25 g or 25 mL. The container might provide one or several servings. Containers of up 250 g or 250 mL, preferably up to 100 g or 100 mL, typically provide a single serving. The container can be a bottle or a cup, for example, a plastic thermoformed cup. The sealing can be provided by a gable top, flexible lid, and/or or plastic cap. The flexible lid can be, for example, thermosealed to or on the opening of the bottle or cup. The container can be a small single cup, for example, of from 5 g or 5 mL to 15 g or 15 mL, and, for example, sealed with a flexible lid. Such small single cups can be offered alone or grouped in a secondary packaging.

The dairy-alternative, plant-based food products disclosed herein when packaged in a container, can be stored, transported and/or distributed at a chilled temperature of 0°C to 10°C, or at ambient ("room") temperature, for example, from 15°C to 25°C.Further embodiments relate to a method as described herein wherein the food product is a beverage or a yoghurt-like product.

In another aspect, the present disclosure also provides for a dairy-alternative plant-based food product obtained by the methods described herein. Such a plant-based food product is chosen from a milk-like product, a beverage, a drinking milk-like product, a milkshake, a drinking yoghurt-like product, a yoghurt-like product, a cheese-like product, a dessert pudding, a dessert cream and an ice cream product.

In preferred embodiments said dairy-alternative, plant-based food products are soy-based, pea-based, almond-based or oat-based food products, preferably a beverage or a yoghurt-like product. In other embodiments mixes of soy, pea, almond and/or oat are included in the plant-based yoghurt-like products.

As used herein, the term "yoghurt-like products" and "based" when used in reference to a plant matter, shall refer to a product comprising at least 0.1% w/w of said plant material, accordingly a soy-based yoghurt like product comprises at least 0.1% w/w of soy protein and optionally other plant proteins or mixtures of plant proteins.

The present inventors have further found that the one or more salts described herein, preferably copper gluconate or blends thereof increase the oat or almond taste of the dairy-alternative, plant-based food product, a taste which is agreeable and searched for by consumers of such food products.

As such, in one embodiment the present disclosure provides for a method for increasing the oat or almond taste dairy-alternative plant-based food products, comprising adding copper gluconate in an amount from 0.0001 % w/w - 2 % w/w, preferably in an amount from 0.001 % w/w -0.5% w/w based on the total weight of said oat- or almond-based food product.

In still another embodiment disclosed herein, there is provided a dairy-alternative oat- or almond-based food product comprising copper gluconate in an amount from 0.0001 % w/w - 2 % w/w, preferably from 0.001 % w/w -0.5% w/w, more preferably from 0.001 % w/w -0.4% w/w or from 0.001 % w/w -0.3% w/w, based on the total weight of said oat- or almond-based food product.

The present disclosure also relates to the use of copper gluconate for increasing the oat or almond taste in dairy-alternative plant-based food products, wherein copper gluconate is added in an amount from 0.0001 % w/w - 2 % w/w, preferably in an amount from 0.001 % w/w -0.5% w/w based on the total weight of said oat- or almond-based food product.

The present invention will be described in greater detail below with the aid of the examples which follow. It goes without saying, however, that these examples are given by way of illustration of the invention and does not constitute in any manner a limitation thereof.

### EXAMPLES

### Example 1: Preparation and taste and/or texture analysis of soy-based milk containing copper gluconate or sodium L-lactate.

The soy-based milk was prepared by soaking soybeans in water to allow a complete hydration of the protein and other components. After this the mixture was ground into a slurry and filtration or centrifugation was conducted to separate soymilk and okara (solid residue).

Copper gluconate or sodium L-lactate in the dosage of 0.003 % w/w or 0.1 % w/w were respectively added to the soymilk. After mixing, the drink underwent a heat treatment.

Sensory evaluation was performed within 2-4 days after production by 3-6 trained panelists. A comparative analysis test was used to evaluate each sample with the reference, i.e. soy milk without any mineral salt added, on a ranking from -3 to + 3. The reference sample was always ranked as zero for each descriptor. A total of six descriptors/attributes were chosen to evaluate the taste and the texture of the soy-based milks.

In Table 1, the descriptors are presented along with their explanation.

**Table 1. Descriptors information for soy-based milk**

| **Sr#** | **Descriptors** | **Explanation** | **Reference sample on rank** |
|---|---|---|---|
| 1 | Beany | Green, Beany Soya off note | 0 |
| 2 | Bitter | Bitter perception - either throughout the taste or aftertaste | 0 |
| 3 | Salty | Salty perception in mouth | 0 |
| 4 | Thickness | Texture/Viscosity - thickness in mouth | 0 |
| 5 | Milk Like | Sweet + lactone/dairy note | 0 |
| 6 | Astringency | Tactile sensation on tongue + lasting drying sensation in mouth | 0 |

Fig. 1 shows the results for each of both salts, i.e. copper gluconate and sodium L-lactate, as compared to the reference. Copper gluconate reduced the beany off note and astringency and improved the texture and milk like flavor. The bitterness was increased a little bit but overall, the flavor profile was more pleasant and improved due to copper gluconate addition.

Sodium L-lactate also improved the taste of the soy-based milk by reducing the beany off note, bitterness, and astringency. The soy-based milk became a little bit salty because of the sodium. The results of thickness and milk like were also significantly improved as compared to the reference sample. Overall, the soy-based milk with sodium L-lactate was preferred over the reference.

### Example 2: Comparison of soy-based milk of the invention with soy-based milk containing other salts

A soy-based milk was prepared and evaluated as described in Example 1, wherein magnesium gluconate or tricalcium phosphate were added as mineral salt, each at 0.2 % w/w. In Fig. 2, these mineral salts, magnesium gluconate and tricalcium phosphate are compared with copper gluconate and sodium L-lactate from Example 1. The same descriptors were used as for Example 1. The addition of magnesium gluconate or tricalcium phosphate to the soy-based milk gave worse results in terms of sensory evaluation when compared to copper gluconate and sodium L-lactate especially when testing for milk like flavor. Furthermore, they did not impact the texture of the soy drink as well as copper gluconate and sodium L-lactate. This proves that different salts may unexpectedly impact the organoleptic properties of a food product in very different ways.

### Example 3: Preparation and taste and/or texture analysis of soy-based milk using a salt blend comprising copper gluconate and sodium L-lactate or Trisodium citrate.

The combined effect of the most promising mineral salts i.e., copper gluconate (CG) and sodium L-lactate (SL) both in dosage of 0.003 % w/w and 0.1 % w/w respectively was assessed in the soy-based milk. In addition, the combined effect of copper gluconate (CG) and Trisodium citrate (TC) (at a concentration of 0.225 % w/w) were assessed in a soy-based milk. The same descriptors were used as for Example 1. In combination, they seemed to amplify each other's impact and resulted in very pleasant organoleptic properties of the soy-based milk. The results of the blends are shown in Fig. 3A and Fig 3B. The results of the blends for each attribute were improved when compared to the individual salts.

### Example 4: Preparation and taste and/or texture analysis of other plant-based milks

Dairy-alternative oat-based milk, almond-based milk, and pea-based milk were prepared by providing a mixture comprising the relevant protein source, vegetal fat, optionally a hydrocolloid composition and water. This mixture then underwent heat treatment and was cooled down immediately for cold storage. Mineral salts were added at the same dosage as in Soy milk. Sensory testing was performed to evaluate each of the attributes shown in Table 2, 3, and 4 respectively for oat-based milk, almond-based milk and pea-based milk.

**Table 2. Descriptors information for oat-based milk**

| **Sr#** | **Descriptors** | **Explanation** | **Reference sample on rank** |
|---|---|---|---|
| 1 | Oat | Oat characteristics | 0 |
| 2 | Bitter | Bitter perception - either throughout the taste or aftertaste | 0 |
| 3 | Salty | Salty perception in mouth | 0 |
| 4 | Thickness | Texture/Viscosity - thickness in mouth | 0 |
| 5 | Milk Like | Sweet + lactone/dairy note | 0 |
| 6 | Astringency | Tactile sensation on tongue + lasting drying sensation in mouth | 0 |

For oat milk, as shown in Figure 4, the addition of copper gluconate accentuated the oat note, reduced a bit astringency and increase thickness and milk-like notes. Sodium L-lactate, on the other hand, was efficient in reducing oat-note. It was also efficient in reducing astringency, increasing thickness and milk-like. Finally, combination of copper gluconate and sodium L-lactate accentuated even more the oat-note, but it also reduced astringency and increased milk-like note. More accentuated oat-based milk is acceptable for a major part of consumers drinking oat-based milk products.

**Table 3. Descriptors information for Almond-based milk**

| **Sr#** | **Descriptors** | **Explanation** | **Reference sample on rank** |
|---|---|---|---|
| 1 | Almond | Almond characteristics | 0 |
| 2 | Bitter | Bitter perception - either throughout the taste or aftertaste | 0 |
| 3 | Salty | Salty perception in mouth | 0 |
| 4 | Thickness | Texture/Viscosity - thickness in mouth | 0 |
| 5 | Milk Like | Sweet + lactone/dairy note | 0 |
| 6 | Astringency | Tactile sensation on tongue + lasting drying sensation in mouth | 0 |

For almond-based milk, as shown in Figure 5, the addition of copper gluconate also accentuated the almond-note. This may potentially provide a cost-efficient opportunity to boost desired almond top note without necessarily increasing almond content in the formula. It also helped to increase thickness. Sodium L-lactate was efficient in reducing almond note and increasing milk-like notes. Finally, combination of copper gluconate and sodium L-lactate showed the same effect as copper gluconate alone in accentuating the almond-note.

**Table 4. Descriptors information for pea-based milk**

| **Sr#** | **Descriptors** | **Explanation** | **Reference sample on rank** |
|---|---|---|---|
| 1 | Pea | Pea characteristics | 0 |
| 2 | Bitter | Bitter perception - either throughout the taste or aftertaste | 0 |
| 3 | Salty | Salty perception in mouth | 0 |
| 4 | Thickness | Texture/Viscosity - thickness in mouth | 0 |
| 5 | Milk Like | Sweet + lactone/dairy note | 0 |
| 6 | Astringency | Tactile sensation on tongue + lasting drying sensation in mouth | 0 |

For pea-based milk, as shown in Figure 6, copper gluconate was efficient in reducing pea note. Sodium L-lactate was further efficient in reducing pea note, as well reducing bitterness and increasing milk-like notes. Combination of copper gluconate and sodium lactate was unexpectedly giving further reduction of pea note, bitterness and astringency; as well as increasing further milk-like notes.

### Example 5: Preparation and taste and/or texture analysis of plant-based alternative yoghurt food products containing copper gluconate and/or sodium lactate, blends of the 2 salts compared to the individual salts or to other salts.

Plant-based dairy-alternative yoghurt is prepared by providing a mixture comprising a soy- and pea-based material, vegetal oil, mineral blends, and lactic acid bacteria, and optionally a hydrocolloid composition, and fermenting the mixture to provide a fermented vegetal-based composition having a pH of 5 or lower.

Sensory testing is performed to evaluate each of the attributes shown in Table 5 below.

**Table 5. Descriptors information for the plant-based alternative yoghurt food products**

| **Sr#** | **Descriptors** | **Explanation** | **Reference sample on rank** |
|---|---|---|---|
| 1 | Vegetal | Green, Beany Soya off note and/or pea characteristics | 0 |
| 2 | Bitter | Bitter perception - either throughout the taste or aftertaste | 0 |
| 3 | Salty | Salty perception in mouth | 0 |
| 4 | Acidity | Sour perception in mouth | 0 |
| 5 | Thickness | Texture/Viscosity - thickness in mouth | 0 |
| 6 | Milk Like | Sweet + lactone/dairy note | 0 |
| 7 | Astringency | Tactile sensation on tongue + lasting drying sensation in mouth | 0 |

## Claims

1. A dairy-alternative, plant-based food product comprising:
a. from 0.0001 % w/w to 2 % w/w of one or more salts selected from the group consisting of lactate salt and gluconate salt based on the total weight of said plant-based food product;
b. from 0.1 % w/w to 30 % w/w plant-based protein based on the total weight of said plant-based food product; and
c. optionally one or more ingredients selected from the group consisting of texturizing and/or stabilizing agent, sweetening agent, flavoring agent, vegetal fat, health-related supplement and/or combinations thereof.

2. The food product according to claim 1 wherein the lactate salts are selected from the group consisting of calcium lactate, magnesium lactate, ferrous lactate, zinc lactate, sodium lactate, potassium lactate and combinations thereof; and the gluconate salts are selected from the group consisting of calcium gluconate, magnesium gluconate, ferrous gluconate, zinc gluconate, manganese gluconate, cupric gluconate, sodium gluconate, potassium gluconate and combinations thereof.

3. The food product according to claim 1 or 2, wherein said one or more salts comprises sodium lactate, preferably sodium L-lactate.

4. The food product according to any one of claims 1 to 3, wherein said one or more salts comprises sodium lactate, preferably sodium L-lactate and copper gluconate.

5. The food product according to any of claims 1 to 4, wherein said one or more salts further comprises a citrate salt, preferably trisodium citrate.

6. The food product according to any one of claims 1 to 5, wherein the plant-based protein is selected from the group consisting of a legume protein, a nut protein, a cereal protein, and/or any combination thereof.

7. The food product according to claim 6, wherein the legume is selected from the group consisting of: soy beans, yellow peas, green peas, split peas, field peas, dry peas, lentil, chickpea, garbanzo bean, navy bean, white navy bean, white pea bean, pea bean, cow pea, horse bean, haricot, pinot bean, mottled bean, small red bean, red Mexican bean, kidney bean, black bean, black turtle bean, cranberry bean, roman bean, speckled sugar bean, lima bean, faba or fava bean, Madagascar bean, green gram, mung bean, green bean, black gram, urad dal, lupin, ube, and/or mixtures or any combination thereof.

8. The food product according to claim 6, wherein the nut is selected from the group consisting of almond, coconut, hazelnut, peanut, cashew, pecan, walnut, macadamia nut, Brazil nut, pine nut, chestnut, pistachio, tiger nut, and/or mixtures or any combination thereof.

9. The food product according to claim 6, wherein the cereal is selected from the group consisting of oat, rye, rice, barley, spelt, barley, sorghum, millet, teff, quinoa, hemp, chia, and/or mixtures or any combination thereof.

10. The food product according to any one of claims 1 to 9, which is a soy-based, pea-based, almond-based or oat-based food product.

11. The food product according to any one of claims 1 to 10, wherein the food product is a milk-like product, a beverage, a drinking milk-like product, a milkshake, a drinking yoghurt-like product, a yoghurt-like product, a cheese-like product, a dessert pudding, a dessert cream and an ice cream product.

12. The food product according to claim 11, wherein the food product is a beverage.

13. The food product according to claim 11 or 12 wherein the food product is a soy-based, pea-based, almond-based or oat-based beverage.

14. The use of one or more mineral salts chosen from r gluconate salts and lactate salts for modifying the organoleptic properties of dairy-alternative plant-based food products to be closer to those of dairy products, preferably wherein said one or more mineral salts are added to a plant-based protein composition each in an amount of between 0.0001 % w/w and 2 % w/w based on the total weight of said plant-based food product, preferably wherein said gluconate salt is copper gluconate and said lactate salt is sodium lactate, more preferably sodium-L-lactate.

15. A method for the preparation of a dairy-alternative plant-based food product according to any one of claims 1 to 13 comprising:
a. providing a mixture comprising:
- one or more salts selected from the group consisting of lactate salts and gluconate salts, wherein each of said one or more salts is present in an amount of 0.0001 % w/w - 2 % w/w based on the total weight of said plant-based food product;
- 0.1 % w/w - 30 % w/w plant-based protein based on the total weight of said plant-based food product; and
- optionally one or more ingredients selected from the group consisting of texturizing and/or stabilizing agent, sweetening agent, flavoring agent, vegetal fat, health-related supplement and/or combinations thereof,
b. carrying out one or more processes selected from the group consisting of homogenization, heat treatment, fermentation and/or combinations thereof; and
c. optionally packaging the processed mixture.

16. The method according to claim 15 wherein said gluconate salt is copper gluconate and said lactate salt is sodium lactate, more preferably sodium-L-lactate.

17. A dairy-alternative plant-based food product obtained by the method as defined in claim 15 or 16, preferably being a beverage or a yoghurt-like product.
